# EUROPÄISCHE PATENTSCHRIFT

(11) **EP 3 055 578 B1**
(45) Veröffentlichungstag und Bekanntmachung des Hinweises auf die Patenterteilung: **01.08.2018**
(21) Anmeldenummer: 14772275.5
(22) Anmeldetag: 22.08.2014
(51) Int. Cl.: F16B 39/38

(54) **BEFESTIGUNGSELEMENT**
FASTENING ELEMENT
ÉLÉMENT DE FIXATION

(30) Priorität: 09.10.2013 DE 102013016714
(43) Veröffentlichungstag der Anmeldung: 17.08.2016
(73) Patentinhaber: Neumayer Tekfor Engineering GmbH, 77756 Hausach (DE)
(72) Erfinder: GRIESSHABER, Freia, 77761 Schiltach (DE); HAAS, Roman, 77756 Hausach (DE)
(86) Internationale Anmeldenummer: PCT/DE2014/000432
(87) Internationale Veröffentlichungsnummer: WO 2015/051773

(56) Entgegenhaltungen:
- US-A- 6 132 153
- US-A1- 2002 157 509
- US-A1- 2002 182 032

## Beschreibung

Die Erfindung betrifft ein Befestigungselement mit mindestens einer Mutter und mit mindestens einer Druckscheibe, wobei die Mutter mindestens einen Innenraum mit einem Innengewinde aufweist, wobei die Mutter an mindestens einem Ende eine - insbesondere radial umlaufende - Anschlagfläche aufweist, wobei ein die Anschlagfläche - insbesondere vollständig - radial umschließender Schnapprand vorgesehen ist, wobei der Schnapprand einen radial nach innen ragenden - und insbesondere radial vollständig umlaufenden - Nasenrand aufweist, wobei zwischen der Anschlagfläche, dem Schnapprand und dem Nasenrand sich eine - insbesondere radial vollständig umlaufende - Kammer ergibt, wobei die Druckscheibe über eine Innenaussparung verfügt, wobei die Druckscheibe mindestens über einen Flanschabschnitt mit einem Außendurchmesser und über einen Zylinderabschnitt mit einem Außendurchmesser verfügt, wobei der Außendurchmesser des Flanschabschnitts größer als der Außendurchmesser des Zylinderabschnitts ist und wobei der Flanschabschnitt, der Zylinderabschnitt, der Schnapprand und der Nasenrand so aufeinander abgestimmt sind und der Nasenrand radial so weit in den Innenraum der Mutter hineinragt, dass der Nasenrand und der Schnapprand den Flanschabschnitt zumindest teilweise umfassen.

Solche Befestigungselemente aus den wenigstens zwei Teilen Mutter und Druckscheibe werden im Stand der Technik beispielsweise für Achszentralverschraubungen an Nutzfahrzeugen verwendet. Alternative Bezeichnungen für die Druckscheibe sind beispielsweise Druckteller, Federteller, Sicherungsscheibe oder allgemein Teller.

Ein dreiteiliges Befestigungselement, bei dem ein Druckring über eine umgebördelte und umlaufende Klammer verliersicher mit der Mutter verbunden ist, offenbart beispielsweise die Gebrauchsmusterschrift DE 88 13 513 U1. Der Druckring verfügt dabei über eine kugelkalottenförmige Unterseite.

Ein zweiteiliges Befestigungsmittel, bei dem die Druckscheibe über spezielle Haltelappen drehbar und unverlierbar durch die Mutter gehalten wird, offenbart die Patentschrift EP 1 577 571 B1. Die Erzeugung der Haltelappen und deren Umbiegen in den Hohlraum der Mutter hinein sind jedoch aufwändig.

Ebenfalls zweiteilige Befestigungsmittel werden offenbart von den Druckschriften US 6,132,153 A oder US 2002/0182032 A1. Die Befestigung einer Druckscheibe bzw. einer mit einem Stutzen versehenen Unterlegscheibe erfolgt jeweils durch Crimpen, indem eine Wandung eines Endabschnitts einer Mutter umgebogen wird.

Eine Art einer Mutter mit einem Innengewinde zeigt die US 2002/0157509 A1. An ihren Stirnseiten weist ein Mutternkörper Vertiefungen auf, um Einschraubteile aufzunehmen. Die Einschraubteile verfügen dabei über einen zylindrischen Abschnitt mit einer Aussparung für einen O-Ring sowie einen sich verschmälernden Abschnitt. Für die O-Ringe sind in dem Mutternkörper ebenfalls Aussparungen vorgesehen. Die Einschraubteile sind mit ihren radial kleineren Abschnitten voran in den Mutternkörper eingebracht.

In der Funktion als Achszentralmutter von Nutzfahrzeugen werden insbesondere einteilige Ganzmetallsicherungsmuttern verwendet, um das Radlager anzustellen und die Radnabe zu befestigen. Bei dieser Anwendung ist im Allgemeinen zusätzlich eine im befestigten Zustand gegenüber einer Verdrehung gesicherte Druckscheibe zwischen Radlager und Sicherungsmutter erforderlich, die während der auftretenden Lastwechsel die Selbsthaltefunktion der Achszentralmutter gewährleistet.

Beim Anziehen der Sicherungsmutter auf einem Bolzen gegenüber einer Befestigungsfläche - z. B. der Radnabe - müssen Drehmomente und Vorspannkräfte aufgebracht werden, die vom Zusammenwirken zwischen der Mutter und dem Bolzen und auch von der Kopfauflagefläche der Befestigungsfläche abhängen. Bei den Achszentralverschraubungen des Standes der Technik bildet die - insbesondere über einen Formschluss gegenüber dem Verdrehen gesicherte - Scheibe diese Kopfauflagefläche. Daher kann eine nicht, falsch oder fehlerhaft positionierte Scheibe die beim Erzeugen der Verschraubung zu überwachenden Größen beeinflussen und verfälschen. Dies kann wiederum zu erheblichen Sicherheitsrisiken führen.

Die Aufgabe der Erfindung besteht daher darin, ein Befestigungselement vorzuschlagen, das eine möglichst einfache Montage erlaubt, ein Vergessen der Druckscheibe verhindert und eine sichere Positionierung der Druckscheibe gewährleistet.

Das erfindungsgemäße Befestigungselement, bei dem die zuvor hergeleitete und aufgezeigte Aufgabe gelöst ist, ist zunächst und im Wesentlichen dadurch gekennzeichnet, dass sich der Nasenrand axial in von der Anschlagfläche abgewandter Richtung derartig verjüngt, dass sich eine radial umlaufende Schräge auf der radial innen liegenden Seite des Nasenrands ergibt, und dass an einem von dem Zylinderabschnitt abgewandten Ende des Flanschabschnitts der Druckscheibe mindestens eine radial umlaufende Verjüngung vorhanden ist.

Die Druckscheibe des erfindungsgemäßen Befestigungselements verfügt über wenigstens zwei Abschnitte, die sich zumindest durch ihren Außendurchmesser voneinander unterscheiden: Der Flanschabschnitt hat einen größeren Außendurchmesser als der Zylinderabschnitt.

In einer Ausgestaltung hat der Zylinderabschnitt eine zylindrische Außenfläche mit einer kreisförmigen Grundfläche. Der Zylinder an sich ist dabei ein Hohlzylinder, bedingt durch die Mittenaussparung für den Bolzen. In einer ergänzenden oder alternativen Ausgestaltung hat der Flanschabschnitt eine zylindrische Außenfläche mit einer kreisförmigen Grundfläche.

Um die Druckscheibe verliersicher fest zu halten, sind der Flanschabschnitt, der Zylinderabschnitt, der Schnapprand und der Nasenrand so aufeinander abgestimmt und ragt der Nasenrand radial so weit in den Innenraum der Mutter hinein, so dass der Nasenrand und der Schnapprand den Flanschabschnitt zumindest teilweise umfassen. Durch den Nasenrand, der radial nach innen gerichtet ist, wird insbesondere die Druckscheibe gegen ein Herausfallen aus der Kammer der Mutter gesichert.

Um das Einbringen der Druckscheibe in die Kammer der Mutter zu vereinfachen, sind insbesondere die beiden nachfolgenden Merkmale vorgesehen.

Der Nasenrand verjüngt sich axial in von der Anschlagfläche abgewandter Richtung derartig, dass sich eine radial umlaufende Schräge auf der radial innen liegenden Seite des Nasenrands ergibt. Der Nasenrand weist somit auf der Seite, die der Druckscheibe zugewandt ist, eine derartige Verjüngung auf, dass der Nasenrand axial nach außen hin - also in der von der Anschlagfläche der Mutter abgewandten Richtung - schmäler wird bzw. umgekehrt formuliert, dass die Fläche des Nasenrands, auf dem die Druckscheibe mit ihrem Flanschabschnitt ruht, radial weiter in den Innenraum der Mutter hineinragt als das axial äußere Ende des Nasenrands. Hierdurch ergibt sich auch eine gezielte Materialschwächung, die das elastische Aufweiten für das Einbringen der Druckscheibe vereinfacht.

Weiterhin ist an einem von dem Zylinderabschnitt abgewandten Ende des Flanschabschnitts der Druckscheibe mindestens eine radial umlaufende Verjüngung vorhanden. Der Flanschabschnitt verfügt in dieser Ausgestaltung nicht über eine Grundfläche mit einer z. B. rechtwinkligen Kante, sondern es ist eine Verjüngung vorgesehen, die insbesondere den Radius der Grundfläche des Flanschabschnitts in dieser Richtung kleiner macht als den Außendurchmesser des insbesondere zylindrischen Flanschabschnitts.

In einer Ausgestaltung ist der Schnapprand ein die Anschlagfläche radial vollständig umschließender Rand. In einer alternativen Ausgestaltung ist der Schnapprand nicht vollständig geschlossen, sondern weist Unterbrechungen auf, so dass in dieser Ausgestaltung auch die Anschlagfläche nur teilweise von dem Schnapprand radial umschlossen wird.

In einer Ausgestaltung ist insbesondere der Nasenrand radial umlaufend ausgestaltet und bildet damit einen ringförmigen Rand bzw. eine umlaufende Kante, auf der die Druckscheibe ruht. Dabei liegt in einer Ausgestaltung insbesondere der Flanschabschnitt auf dem Nasenrand auf und wird der Zylinderabschnitt von dem Nasenrand radial umfasst. Dabei besteht vorzugsweise zumindest zwischen dem Zylinderabschnitt und dem Nasenrand ein radialer Abstand.

In einer Ausgestaltung handelt es sich insbesondere um ein zweiteiliges Befestigungselement, das insbesondere durch das Einbringen der Druckscheibe bei der Fertigung und durch die damit erzeugte unverlierbare Befestigung als eine Gesamtkomponente zu benutzen ist. Dies vereinfacht das "Handling" durch den Anwender des Befestigungselements.

In einer Ausgestaltung sind der Flanschabschnitt und der Schnapprand so aufeinander abgestimmt, dass der Schnapprand den Flanschabschnitt mit einer - insbesondere radial umlaufenden - Fuge umgibt. In dieser Ausgestaltung befindet sich zwischen dem Flanschabschnitt, der sich insbesondere innerhalb der Kammer der Mutter befindet, und dem Schnapprand ein Freiraum, durch den ein Verdrehen zwischen Mutter und Druckscheibe möglich ist. Es besteht daher eine bewegliche Verbindung zwischen Mutter und Druckscheibe, die insbesondere auch eine Rücksichtnahme auf Fertigungstoleranzen ermöglicht.

Bezüglich der Geometrie der Druckscheibe und damit mittelbar auch bezüglich der Geometrie der Mutter ist in einer Ausgestaltung vorgesehen, dass der Flanschabschnitt und/oder der Zylinderabschnitt und/oder die Druckscheibe rotationssymmetrisch um eine Längsachse der Druckscheibe ausgestaltet sind/ist.

In einer Variante handelt es sich bei der Druckscheibe um ein Teil, das aus zwei hohlzylindrischen Abschnitten mit jeweils kreisförmiger Grundfläche besteht, wobei die Außendurchmesser sich unterscheiden. Die Höhen der Abschnitte - also des Flansch- und des Zylinderabschnitts - hängen dabei ab von der Höhe des Schnapprands bzw. um welches Maß die Druckscheibe die Mutter überragen soll.

Die vorgehende Ausgestaltung wird beispielsweise realisiert mit der Ausgestaltung, dass die Druckscheibe als im Wesentlichen massives Bauteil ausgeführt ist. Die Druckscheibe ist dabei in einer Ausgestaltung zumindest in einem Fertigungsschritt spanend als Drehteil erzeugt und wird in einer alternativen Ausgestaltung nichtspanend durch ein entsprechendes Umformverfahren erzeugt.

In einer Ausgestaltung sind die beiden äußeren axialen Grundflächen der Druckscheibe jeweils plan bzw. flach. In einer Ausgestaltung ist wenigstens die äußere Seite des Flansch- bzw. des Zylinderabschnitts plan und frei von Wölbungen. In einer Ausgestaltung ist wenigstens eine Grundfläche nicht plan, sondern weist wenigstens eine Wölbung oder Vertiefung auf.

Die Druckscheibe wird insbesondere durch den Nasenrand gehalten und ist daher verliersicher mit der Mutter verbunden. Bei der Mutter selbst handelt es sich insbesondere um ein massives Bauteil, welches aus einem Metall, insbesondere Stahl besteht.

Um die Druckscheibe mit der Mutter zu dem Befestigungselement zu verbinden, sieht eine Ausgestaltung vor, dass die Mutter derartig ausgestaltet ist, dass der Nasenrand und/oder der Schnapprand im Wesentlichen elastisch aufweitbar sind/ist. Für die Fertigung wird somit die Druckscheibe so in die Kammer der Mutter eingebracht, dass sich diese im Wesentlichen leicht elastisch aufweitet und dadurch das Einführen der Druckscheibe erlaubt. Dafür ist das Material und sind insbesondere auch die geometrischen Abmessungen der Mutter insbesondere hinsichtlich des Schnapprands bzw. des Nasenrands zu wählen.

Durch die elastische Aufweitung kehrt der Schnapprand bzw. der Nasenrand nach dem Einbringen der Druckscheibe wieder in die ursprüngliche Position bzw. Geometrieform zurück und hält dann die Druckscheibe verliersicher fest.

Die folgende Ausgestaltung bezieht sich insbesondere darauf, dass - insbesondere bei der Anwendung des Befestigungselements als Achszentralverschraubung durch Lastwechsel Mikrobewegungen zwischen Bolzen und Befestigungselement auftreten können und dass verhindert werden muss, dass sich dadurch das Befestigungselement von dem Bolzen wieder löst. Die Druckscheibe wird daher im Folgenden durch ihre Ausformung an einem Verdrehen gegenüber dem Bolzen gehindert.

Daher besteht eine Ausgestaltung darin, dass mindestens ein in die Innenaussparung der Druckscheibe hineinragende Vorsprung vorgesehen ist.

In einer Ausgestaltung ist zumindest an einem von dem Flanschabschnitt abgewandten Ende des Zylinderabschnitts der mindestens eine in die Innenaussparung der Druckscheibe hineinragender Vorsprung vorgesehen.

In einer Ausgestaltung ist zudem vorgesehen, dass mindestens zwei in die Innenaussparung der Druckscheibe hineinragende Vorsprünge vorgesehen sind. Die mindestens zwei Vorsprünge sind in einer Ausgestaltung einander im Wesentlichen diametral gegenüberliegend angeordnet.

Der Vorsprung bzw. die Vorsprünge sollen ein Drehen der Druckscheibe gegenüber dem Bolzen im angezogenen bzw. befestigten Zustand des Befestigungselements verhindern.

In einer Ausgestaltung sind die Vorsprünge bzw. ist der Vorsprung im Wesentlichen entlang der ganzen Höhe der Innenaussparung der Druckscheibe vorhanden.

In einer Variante ist die Druckscheibe federnd ausgestaltet.

Vorzugsweise wird die federnde Druckscheibe in einer Variante so in die Kammer der Mutter eingebracht bzw. ist entsprechend einbringbar, so dass die Druckscheibe insbesondere in dem auf einem Bolzen befestigten Zustand eine Vorspannung aufweist. Hierfür sind die Mutter und die Druckscheibe entsprechend auszugestalten und aufeinander abzustimmen.

Das weitere Einbringen der Druckscheibe in die Kammer der Mutter ereignet sich bei der federnd ausgestalteten Druckscheibe insbesondere beim Befestigen des Befestigungselements auf einem Bolzen. Beim Befestigen wird die Druckscheibe zwischen Mutter und Auflagefläche flach gedrückt und es baut sich eine Vorspannung auf, die daraus resultiert, dass die federnde Druckscheibe in ihre Ausgangsgeometrie zurückkehren möchte.

Dabei ist in einer Ausgestaltung vorgesehen, dass in dem Zustand ohne Vorspannung - also in der entspannten Ausgangslage - die Druckscheibe eine imaginäre Grundfläche mit einer Erhebung aufspannt. Da die Druckscheibe eine Mittenaussparung - für den Bolzen - aufweist, ergibt sich die imaginäre Grundfläche insbesondere dadurch, dass der leere Innenraum gedanklich mit den umgebenden Bereichen der Druckscheibe verbunden wird. Die Geometrie und Ausformung der Druckscheibe bewirkt somit gleichsam eine Wölbung der Druckscheibe.

Diese Wölbung - bzw. hier Erhebung - weist dabei in einer Ausgestaltung entgegen der Anschlagfläche der Mutter - also gleichsam aus der Mutter heraus - oder in Richtung der Anschlagfläche und damit quasi in die Mutter hinein.

In einer Ausgestaltung ist nur eine Erhebung vorgesehen, die in einer weiteren Ausgestaltung im Wesentlichen auf der Längsachse der Druckscheibe liegt. Die Druckscheibe verfügt über einen Erhöhungsbauch der Druckscheibe, der in einer Ausgestaltung insbesondere auf der Längsachse der Druckscheibe liegt. Ist die Druckscheibe insbesondere rotationsförmig ausgestaltet, so liegt die Erhebung auf der Längsachse, um die herum die Druckscheibe rotationssymmetrisch ausgestaltet ist.

Wird bei der letzten Ausgestaltung das Befestigungselement um einen Bolzen gegen eine Fläche (z. B. eine Radnabe) angezogen, so wird bei der Ausgestaltung, dass die Druckscheibe in der Grundposition in der von der Anschlagfläche abgewandten Richtung nach außen ragt, die Druckscheibe axial in Richtung der Anschlagfläche der Mutter gedrückt. Dadurch wird vorzugsweise der Zylinderabschnitt in Richtung des Schnapprands geführt. Die Vorspannung ergibt sich hierbei über das "Flachpressen" der Druckscheibe, die in die Ausgangslage mit Erhebung zurückkehren möchte.

Eine weitere Ausgestaltung sieht vor, dass an einem freien Ende der Mutter mindestens ein Sicherungselement vorhanden ist.

Das Sicherungselement dient insbesondere der Sicherung der Mutter gegenüber dem Verdrehen auf einem Bolzengewinde, auf dem das Befestigungselement insgesamt zu befestigen ist. Das freie Ende der Mutter liegt dabei insbesondere dem Ende der Mutter, das die Anschlagfläche aufweist, gegenüber. Das Sicherungselement ist insbesondere ein auf Reibung im Gewinde basierendes Sicherungselement, wie beispielsweise ein Klemmelement bzw. Klemmsegment, dessen Gewindebereich unter einem vorgebbaren Neigungswinkel in Richtung der Längsachse der Mutter geneigt ist und somit in den Innenraum der Mutter hineinreicht. Ein solches Sicherungselement ist beispielsweise bekannt bei den ENKO-Muttern der Anmelderin.

Im Einzelnen gibt es eine Vielzahl von Möglichkeiten, das erfindungsgemäße Befestigungselement auszugestalten und weiterzubilden. Dazu wird verwiesen einerseits auf die dem Patentanspruch 1 nachgeordneten Patentansprüche, andererseits auf die folgende Beschreibung eines Ausführungsbeispiels in Verbindung mit der Zeichnung. Dabei zeigen:
- Fig.1: einen Schnitt durch ein erfindungsgemäßes Befestigungselement gemäß einer ersten Variante,
- Fig. 2: einen vergrößerten Ausschnitt des Befestigungselements der Fig. 1,
- Fig. 3: eine räumliche Darstellung des Befestigungselements der Fig. 1,
- Fig. 4: einen Schnitt durch ein Befestigungselement gemäß einer zweiten Variante,
- Fig. 5: den Schnitt der Fig. 4 mit einer eingezeichneten imaginären Grundfläche der Druckscheibe und
- Fig. 6: eine vergrößerte Detailansicht des Befestigungselements der Fig. 4.

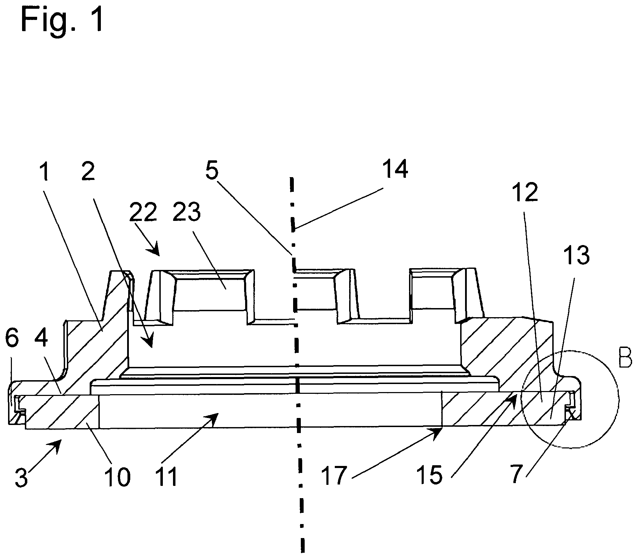

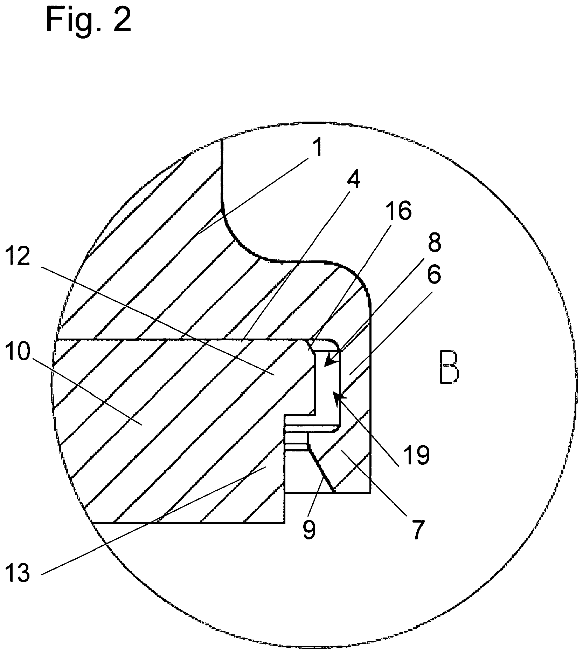

Der in der Fig. 1 dargestellte Schnitt und das mit B bezeichnete und in der Fig. 2 vergrößert dargestellte Detail zeigen das erfindungsgemäße Befestigungselement, das aus einer Mutter 1 und einer Druckscheibe 10 besteht. Die Mutter 1 umfasst dabei die Druckscheibe 10 und hält sie damit unverlierbar fest, so dass bei der Anwendung effektiv nur ein Objekt beispielsweise für die Befestigung einer Radnabe vorliegt. Durch diese Verbindung wird auch sichergestellt, dass die Druckscheibe 10 relativ zur Mutter 1 stets richtig positioniert ist.

Die Mutter 1 verfügt über einen Innenraum 2, in dem sich das Innengewinde für die Befestigung auf einem - hier nicht dargestellten - Bolzen befindet. An dem Ende 3 der Mutter 1, das im Zustand der Befestigung meist gegenüber einer Fläche eines Objekts, das über den Bolzen verfügt, anliegt, ist eine Anschlagfläche 4 vorgesehen, gegen die im befestigten Zustand die Druckscheibe 10 gedrückt ist. Die Anschlagfläche 4 umfasst hier radial umlaufend und auch rotationssymmetrisch zur Längsachse 5 der Mutter 1 den Innenraum 2.

Seitlich wird die Anschlagfläche 4 umrandet von einem Schnapprand 6, der sich bei der dargestellten Ausgestaltung axial mit einer vorgebbaren Höhe parallel zur Längsachse 5 erstreckt. Der Schnapprand 6, der sich hier unmittelbar an die Anschlagfläche 4 anschließt, ist dabei gleichsam auch der seitliche Schutz der Druckscheibe 10.

Als axial äußerer Bereich an diesem Ende 3 der Mutter 1 mündet der Schnapprand 6 in einen Nasenrand 7, der als Kante in den Innenraum 2 der Mutter 1 hineinragt. Der Nasenrand 7 ist dabei ebenfalls um die Längsachse 5 herum rotationssymmetrisch ausgestaltet. Der Schnapprand 6 geht hier ebenfalls einstückig in den Nasenrand 7 über.

Insgesamt wird durch die Anschlagfläche 4, den Schnapprand 6 und den Nasenrand 7 eine radial umlaufende Kammer 8 gebildet, die sich an den eigentlichen Mutterkörper anschließt und die die Druckscheibe 10 aufnimmt.

Der Nasenrand 7 verjüngt sich in der Richtung entgegen der Anschlagfläche 4, so dass sich auf der dem Innenraum 2 zugewandten Seite eine Schräge 9 ergibt.

Diese Schräge 9 ist zum einen eine gezielte Materialschwächung des Nasenrands 7, um das elastische Verhalten des Nasenrands 7 bzw. des Schnapprands 6 für das Einbringen der Druckscheibe 10 bei der Montage des Befestigungselements zu ermöglichen. Zum anderen vereinfacht eine solche Schräge auch das Einführen der Druckscheibe 10 während der Montage in die Kammer 8 der Mutter 1.

Die Druckscheibe 10 ist hier als rotationssymmetrisches, massives Bauteil ausgeführt, das zwei im Wesentlichen zylindrische Abschnitte 12, 13 aufweist. Die beiden Abschnitte 12, 13 sind dabei hohlzylindrisch um die Innenaussparung 11 herum ausgestaltet, durch die bei der Anbringung des Befestigungselements der - hier nicht dargestellte - Bolzen geführt wird.

Bei der Darstellung der Fig. 1 sind die Mutter 1 und die Druckscheibe 10 so zueinander angeordnet, dass die Längsachse 5 der Mutter 1 und die Längsachse 14 der Druckscheibe 10 zusammenfallen.

Die beiden zylindrischen Abschnitte 12, 13 sind ein Flanschabschnitt 12 und ein Zylinderabschnitt 13. Dabei hat der Flanschabschnitt 12 einen größeren Außendurchmesser als der Zylinderabschnitt 13.

Die beiden Außendurchmesser sind insbesondere so vorgegeben bzw. mit den Dimensionierungen der Mutter 1 abgeglichen, dass der Flanschabschnitt 12 gerade auf dem Nasenrand 7 zu ruhen kommt, wobei der Zylinderabschnitt 13 radial von dem Nasenrand 7 umgeben wird.

Insbesondere die Höhe des Zylinderabschnitts 13 ist in der dargestellten Ausgestaltung so bestimmt, dass die Druckscheibe axial über die Mutter 1 bzw. speziell den Nasenrand 7 hinausragt.

Der Flanschabschnitt 12 befindet sich derartig innerhalb der Kammer 8, so dass eine Fuge 19 zwischen dem Außenrand des Flanschabschnitts 12 und dem Innenrand des Schnapprands 6 besteht. Die Fuge 19 bedeutet, dass die Druckscheibe 10 mit einem gewissen Spiel von der Mutter 1 gehalten wird, durch welches eine Relativbewegung zwischen Unterlegscheibe 10 und Mutter 1 ermöglicht wird.

Die Druckscheibe 10 ist an der von dem Zylinderabschnitt 13 abgewandten Ende 15 und an der gegenüberliegenden, also vom Flanschabschnitt 12 abgewandten Ende 17 jeweils plan ausgestaltet.

Für das Einfädeln der Druckscheibe in die Kammer 8 der Mutter 1 ist an der Außenkante des vom Zylinderabschnitt 12 abgewandten Ende 15 der Druckscheibe 10 eine Verjüngung 16 vorgesehen.

Zu erkennen ist insbesondere, dass der Nasenrand 7 die Druckscheibe 10 vollständig umgreift und damit auch einen Schutzrand gegenüber dem Einbringen von Verschmutzungen oder z. B. Feuchtigkeit darstellt. Diese Abdichtung dient auch der Möglichkeit, das Befestigungselement mehrfach zu verwenden. Dazu trägt auch bei, dass die Druckscheibe 10 ohne eine Formveränderung - wie sie beispielweise beim Umbördeln stattfindet - in die Mutter 1 eingebracht und dort gehalten und durch den umfassenden Nasenrand 7 auch geschützt wird.

Eine weitere Sicherung der Mutter 1 auf dem jeweiligen Bolzen ergibt sich durch die Sicherungselemente 23, die sich an dem freien Ende 22 der Mutter 1 befinden. Das freie Ende 22 liegt dabei dem Ende 3, das die Druckscheibe 10 aufnimmt, gegenüber.

Die Sicherungselemente 23 sind einzelne Segmente, die unter einem gewissen Neigungswinkel in Richtung der Längsachse 5 der Mutter 1 geneigt sind und dadurch gegen den - hier nicht dargestellten - Bolzen gedrückt werden. Die Sicherungselemente 23 verfügen dabei zumindest über Teile bzw. Abschnitte eines Innengewindes.

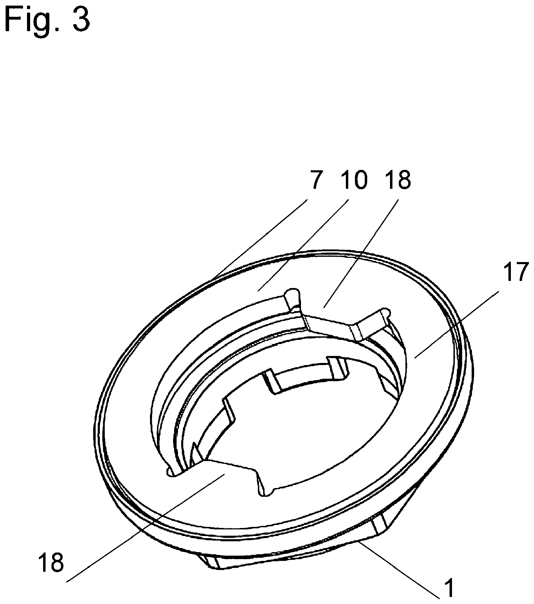

Die Fig. 3 zeigt in einer räumlichen Darstellung die Unterseite des Befestigungselements der Abbildungen Fig. 1 und 2. Dabei ist zu erkennen, dass an der nach außen ragenden Seite der planen Druckscheibe 10, also am vom Flanschabschnitt abgewandten Ende 17 des Zylinderabschnitts 13 zwei Vorsprünge 18 vorgesehen sind, die radial in den Innenraum der Druckscheibe 10 hineinragen und sich auf der ganzen Höhe der Innenseite der Druckscheibe 10 axial durchgehend erstrecken. Diese beiden Vorsprünge 18 liegen hier einander diametral gegenüber und dienen nach der Montage auf einem Bolzen insbesondere der Verhinderung einer Drehbewegung. Hierdurch wird eine Verdrehsicherung des Befestigungselements auf einem - hier nicht dargestellten - Bolzen realisiert.

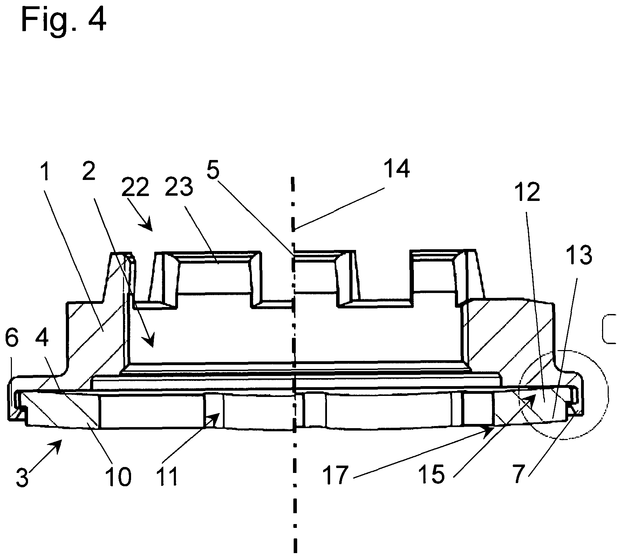

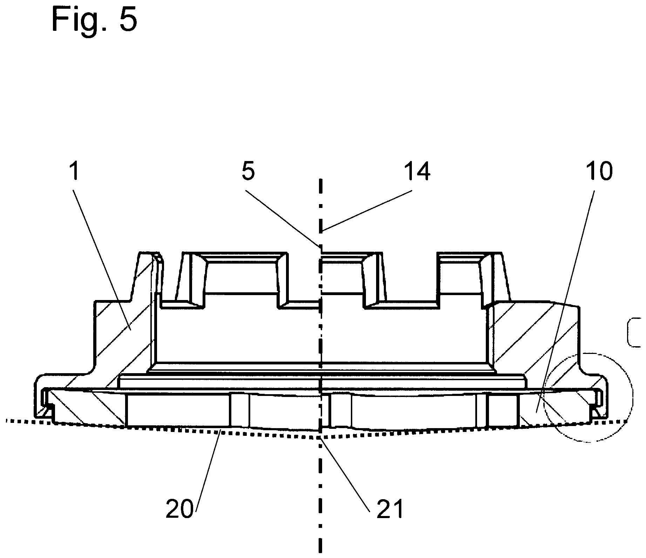

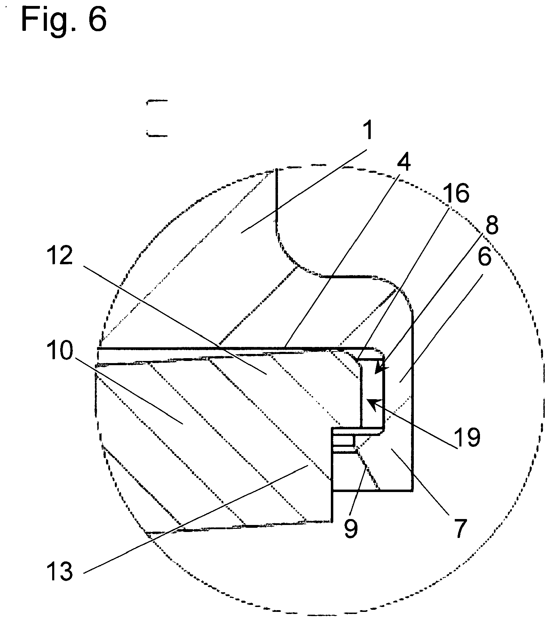

Die Abbildungen Fig. 4 und 5 sowie der mit C bezeichnete und in der Fig. 6 vergrößert dargestellte Ausschnitt zeigen eine alternative Ausgestaltung des Befestigungselements aus Mutter 1 und Druckscheibe 10. Der wesentliche Unterschied zu der zuerst gezeigten Variante ist durch die Form der Druckscheibe 10 gegeben.

Die Druckscheibe 10 ist hier federnd ausgestaltet, wobei die Druckscheibe 10 mit einer Vorspannung gegenüber der Anschlagfläche 4 der Mutter 1 im auf einem - hier nicht dargestellten - Bolzen befestigten Zustand anliegt. Wie in der Fig. 5 eingezeichnet, bildet die Druckscheibe 10 im nicht befestigten, also gleichsam freien Grundzustand eine imaginäre Grundfläche 20, die hier an einer Erhebung 21 axial nach außen gewölbt ist. Die Erhebung 21 liegt dabei auf der Längsachse 14 der Druckscheibe 10 und daher entlang der Achse, über die bei der Befestigung der - hier nicht dargestellte - Bolzen in das Befestigungselement eingebracht wird.

Dabei ruht der Flanschabschnitt 12 jedoch auch im entspannten Zustand ohne Vorspannung verliersicher innerhalb der Kammer 8 der Mutter 1.

Wird der - hier nicht dargestellte - Bolzen durch das Befestigungselement hindurchgeführt und die Mutter angezogen, so erfährt die Druckscheibe 10 eine Kraft, die sie radial nach außen in die Kammer 8 hineindrückt. Diese abgeflachte Geometrie der elastisch federnden Druckscheibe 10 erzeugt eine Vorspannung in der Druckscheibe 10; daher strebt die Druckscheibe 10 im angezogenen Zustand wieder zurück in die energetisch niedrigere Geometrie mit der Erhebung 21 längs der Längsachse 14.

Die Variante des Befestigungselements mit einem Federteller als Druckscheibe 10 ist insbesondere für den Fall eines Verlusts der Vorspannkraft vorgesehen. Sollte die Vorspannkraft des Befestigungselements z. B. durch die angesprochenen Mikrobewegungen nachlassen, so besteht durch die federnde Druckscheibe 10 immer noch eine gewisse Rest-Vorspannung, die einem freien Aufdrehen der Mutter 1 entgegenwirkt.

## Patentansprüche

1. Befestigungselement mit mindestens einer Mutter (1) und mit mindestens einer Druckscheibe (10),
wobei die Mutter (1) mindestens einen Innenraum (2) mit einem Innengewinde aufweist,
wobei die Mutter (1) an mindestens einem Ende (3) eine - insbesondere radial umlaufende - Anschlagfläche (4) aufweist,
wobei ein die Anschlagfläche (4) - insbesondere vollständig - radial umschließender Schnapprand (6) vorgesehen ist,
wobei der Schnapprand (6) einen radial nach innen ragenden - und insbesondere radial vollständig umlaufenden - Nasenrand (7) aufweist,
wobei zwischen der Anschlagfläche (4), dem Schnapprand (6) und dem Nasenrand (7) sich eine - insbesondere radial vollständig umlaufende - Kammer (8) ergibt, wobei die Druckscheibe (10) über eine Innenaussparung (11) verfügt,
wobei die Druckscheibe (10) mindestens über einen Flanschabschnitt (12) mit einem Außendurchmesser und über einen Zylinderabschnitt (13) mit einem Außendurchmesser verfügt,
wobei der Außendurchmesser des Flanschabschnitts (12) größer als der Außendurchmesser des Zylinderabschnitts (13) ist und
wobei der Flanschabschnitt (12), der Zylinderabschnitt (13), der Schnapprand (6) und der Nasenrand (7) so aufeinander abgestimmt sind und der Nasenrand (7) radial so weit in den Innenraum (2) der Mutter (1) hineinragt, dass der Nasenrand (7) und der Schnapprand (6) den Flanschabschnitt (12) zumindest teilweise umfassen,
**dadurch gekennzeichnet,**
**dass** sich der Nasenrand (7) axial in von der Anschlagfläche (4) abgewandter Richtung derartig verjüngt, dass sich eine radial umlaufende Schräge (9) auf der radial innen liegenden Seite des Nasenrands (7) ergibt, und
**dass** an einem von dem Zylinderabschnitt (13) abgewandten Ende des Flanschabschnitts (12) der Druckscheibe (10) mindestens eine radial umlaufende Verjüngung (16) vorhanden ist.

2. Befestigungselement nach Anspruch 1, **dadurch gekennzeichnet, dass** der Flanschabschnitt (12) und der Schnapprand (6) so aufeinander abgestimmt sind, dass der Schnapprand (6) den Flanschabschnitt (12) mit einer - insbesondere radial umlaufenden - Fuge (19) umgibt.

3. Befestigungselement nach Anspruch 1 oder 2, **dadurch gekennzeichnet, dass** der Flanschabschnitt (12) und/oder der Zylinderabschnitt (13) und/oder die Druckscheibe (10) rotationssymmetrisch um eine Längsachse (14) der Druckscheibe (10) ausgestaltet sind/ist.

4. Befestigungselement nach einem der Ansprüche 1 bis 3, **dadurch gekennzeichnet, dass** die Druckscheibe (10) als im Wesentlichen massives Bauteil ausgeführt ist.

5. Befestigungselement nach einem der Ansprüche 1 bis 4, **dadurch gekennzeichnet, dass** die Mutter (1) derartig ausgestaltet ist, dass der Nasenrand (7) und/oder der Schnapprand (6) im Wesentlichen elastisch aufweitbar sind/ist.

6. Befestigungselement nach einem der Ansprüche 1 bis 5, **dadurch gekennzeichnet, dass** mindestens ein in die Innenaussparung (11) der Druckscheibe (10) hineinragender Vorsprung (18) vorgesehen ist, wobei insbesondere mindestens zwei - ganz insbesondere einander im Wesentlichen diametral gegenüberliegende - in die Innenaussparung (11) der Druckscheibe (10) hineinragende Vorsprünge (18) vorgesehen sind.

7. Befestigungselement nach einem der Ansprüche 1 bis 6, **dadurch gekennzeichnet, dass** die Druckscheibe (10) federnd ausgestaltet ist und dass die Druckscheibe vorzugsweise derartig in die Kammer (8) einbringbar ist, so dass die Druckscheibe (10) eine Vorspannung aufweist und wobei besonders vorzugsweise die Druckscheibe (10) eine imaginäre Grundfläche (20) mit - insbesondere nur - einer - ganz insbesondere auf der Längsachse (14) der Druckscheibe (10) liegenden - Erhebung (21) aufspannt.

8. Befestigungselement nach einem der Ansprüche 1 bis 7, **dadurch gekennzeichnet, dass** an einem freien Ende (22) der Mutter (1) mindestens ein Sicherungselement (23) vorhanden ist.

## Claims

1. Fastening element with at least one nut **(1)** and with at least one thrust washer (10),
whereby the nut (1) has at least one interior space (2) with an internal thread, whereby the nut (1) having a stop surface (4) at at least one end (3), in particular a radially circumferential stop surface,
whereby a snap-on edge (6) is provided - in particular fully - radially enclosing the stop surface (4),
whereby the snap-on edge (6) has a radially inwardly projecting - and in particular radially fully circumferential - nose edge (7),
whereby a chamber (8) - in particular a radially completely circumferential - chamber results between the stop face (4), the snap-on edge (6) and the nose edge (7), whereby the thrust washer (10) has an inner recess (11),
whereby the thrust washer (10) having at least one flange section (12) having an outer diameter and a cylinder section (13) having an outer diameter,
whereby the outer diameter of the flange section (12) is larger than the outer diameter of the cylinder section (13), and
whereby the flange section (12), the cylinder section (13), the snap edge (6) and the nose edge (7) are matched to one another and the nose edge (7) projects radially into the interior (2) of the nut (1) so far that the nose edge (7) and the snap edge (6) at least partially comprise the flange section (12),
**characterized by the fact that**
the nose edge (7) tapers axially in a direction remote from the stop face (4) such that a radially circumferential bevel (9) results on the radially inner side of the nose edge (7), and that at least one radially circumferential taper (16) is present at an end of the flange section (12) of the thrust washer (10) remote from the cylinder section (13).

2. Fastening element according to claim 1, **characterized in that** the flange section (12) and the snap-on edge (6) are matched to one another such that the snap-on edge (6) surrounds the flange section (12) with a joint (19), in particular a - radially circumferential - joint.

3. Fastening element according to claim 1 or 2, **characterized in that** the flange section (12) and/or the cylinder section (13) and/or the thrust washer (10) are/are designed rotationally symmetrical about a longitudinal axis (14) of the thrust washer (10).

4. Fastening element according to one of claims 1 to 3, **characterized in that** the thrust washer (10) is designed as a substantially solid component.

5. Fastening element according to one of claims 1 to 4, **characterized in that** the nut (1) is so designed that the nose edge (7) and/or the snap edge (6) are/is essentially elastically expandable.

6. Fastening element according to one of claims 1 to 5, **characterized in that** at least one projection (18) projecting into the inner recess (11) of the thrust washer (10) is provided, at least two projections (18) projecting into the inner recess (11) of the thrust washer (10), in particular at least two projections (18) projecting substantially diametrically opposite one another in particular.

7. Fastening element according to one of claims 1 to 6, **characterized in that** the pressure disc (10) is designed to be resilient and that the pressure disc can preferably be introduced into the chamber (8) in such a way that the pressure disc (10) has a preload and, in particular, preferably the pressure disc (10) has an imaginary base surface. (20), in particular with only - one elevation (21) - lying in particular on the longitudinal axis (14) - of the thrust washer (10).

8. Fastening element according to one of claims 1 to 7, **characterized in that** at least one securing element (23) is provided at a free end (22) of the nut (1).

## Revendications

1. Élément de fixation avec au moins un écrou (1) et au moins un disque de pression (10),
l'écrou (1) présentant au moins un espace intérieur (2) doté d'un filet intérieur,
l'écrou (1) présentant au moins sur une extrémité (3) une surface de butée (4) notamment radial sur son pourtour,
un bord de blocage (6) entourant complètement le pourtour radial de la surface de butée (4) étant prévu,
le bord de blocage (6) présentant un bord à ergot (7) orienté radialement vers l'intérieur et à pourtour radial complet,
une chambre (8) - à pourtour radial complet - étant créée entre la surface de butée (4), le bord de blocage (6) et le bord de l'ergot (7), le disque de pression étant doté d'un évidement intérieur (11),
le disque de pression (10) ayant au moins un segment de collier (12) avec un diamètre extérieur et un segment de cylindre (13) ayant un diamètre extérieur,
le diamètre extérieur du segment de collier (12) étant supérieur au diamètre extérieur du segment de cylindre (13) et
le segment du collier (12), le segment du cylindre (13), le bord de blocage (6) et le bord de l'ergot (7) s'insérant dans l'espace intérieur (2) de l'écrou (1) au point que le bord de l'ergot (7) et le bord de blocage (6) entourent le segment de collier (12) au moins partiellement,
**caractérisé en ce que**
le bord de l'ergot (7) est effilé dans le sens éloigné de la surface de butée (4), de manière à créer une surface inclinée à pourtour radial (9)sur la face radiale intérieure du bord de l'ergot (7), et
**en ce que** sur une extrémité du segment du collier (12) du disque de pression (10) non tournée vers le segment du cylindre (13) au moins un effilement de pourtour radial (16) est présent.

2. Élément de fixation conforme à l'exigence 1 **caractérisé en ce que** le segment de collier (12) et le bord de blocage (6) sont alignés de manière à ce que le bord de blocage (6) entoure le segment de collier (12) avec un joint (19) à pourtour radial.

3. Élément de fixation conforme à l'exigence 1 ou 2, **caractérisé en ce que** le segment de collier (12) et/ou le segment de cylindre (13) et/ou le disque de pression (10) est/sont disposé(s) selon une symétrie de révolution autour d'un axe longitudinal (14) du disque de pression (10).

4. Élément de fixation conforme à l'une des exigences 1 à 3 **caractérisé en ce que** le disque de pression (10) est exécuté essentiellement comme un composant massif.

5. Élément de fixation conforme à l'une des exigences 1 à 4 **caractérisé en ce que** l'écrou (1) est exécuté de manière à ce que le bord de l'ergot (7) et/ou le bord de blocage (6) est/sont extensible(s) élastiquement.

6. Un élément de fixation conformément à l'une des exigences 1 à 5 **caractérisé par** au moins une saillie (18) s'engageant dans l'évidement intérieur (11) du disque de pression (10), avec en particulier au moins deux saillies (18) - essentiellement opposées diamétralement - s'engageant dans l'évidement intérieur (11) du disque de pression (10).

7. Élément de fixation conforme à l'une des exigences 1 à 6, **caractérisé en ce que** le disque de pression (10) est exécuté à ressort et que le disque de pression peut être inséré de préférence dans la chambre (8) de sorte que le disque de pression (10) présente une pré-tension et que le disque de pression (10) ait de préférence une surface imaginaire (20) avec en particulier une seule saillie (21) particulièrement serrée sur l'axe longitudinal (14) du disque de pression (10).

8. Élément de fixation conforme à l'une des exigences 1 à 7 **caractérisé en ce qu'**au moins un élément de sécurisation (23) est présent sur une extrémité libre (22) de l'écrou (1).
